# NEUE EUROPÄISCHE PATENTSCHRIFT

(11) **EP 3 914 559 B2**
(45) Veröffentlichungstag und Bekanntmachung des Hinweises auf die Entscheidung über den Einspruch: **01.10.2025**
(45) Hinweis auf die Patenterteilung: 08.06.2022
(21) Anmeldenummer: 20701941.5
(22) Anmeldetag: 20.01.2020
(51) Int. Cl.: C02F 1/00, C02F 1/42, F16K 11/074, F16K 37/00, B01J 49/75, B01J 49/85

(54) **VORRICHTUNG UND VERFAHREN ZUR BESTIMMUNG DER POSITION EINES STEUERELEMENTS FÜR EIN VENTILSYSTEM IN EINER WASSERBEHANDLUNGSANLAGE**
DEVICE AND METHOD FOR DETERMINING THE POSITION OF A CONTROL ELEMENT FOR A VALVE SYSTEM IN A WATER TREATMENT PLANT
DISPOSITIF ET PROCÉDÉ SERVANT À DÉFINIR LA POSITION D'UN ÉLÉMENT DE COMMANDE POUR UN SYSTÈME DE SOUPAPE DANS UNE INSTALLATION DE TRAITEMENT D'EAU

(30) Priorität: 22.01.2019 DE 102019101531
(43) Veröffentlichungstag der Anmeldung: 01.12.2021
(73) Patentinhaber: Judo Wasseraufbereitung GmbH, 71364 Winnenden (DE)
(72) Erfinder: BROCKE, Sebastian, 71642 Ludwigsburg (DE); MASSA, Eckard, 71720 Oberstenfeld-Gronau (DE)
(74) Vertreter: Kohler Schmid Möbus Patentanwälte
(86) Internationale Anmeldenummer: PCT/EP2020/051252
(87) Internationale Veröffentlichungsnummer: WO 2020/152085

(56) Entgegenhaltungen:
- EP-A2- 0 184 773
- EP-A2- 0 184 773
- WO-A1-2017/117026
- AU-B2- 1 630 597
- DE-B3- 102011 119 021
- DE-C2- 4 227 135
- US-A1- 2016 341 323
- US-A1- 2016 341 323
- US-A1- 2017 197 854
- US-A1- 2017 197 854
- US-A1- 2017 362 101
- US-A1- 2017 362 101
- US-B2- 8 961 797

## Beschreibung

Die Erfindung betrifft ein Verfahren zum Betrieb einer Wasserbehandlungsanlage, umfassend
- mindestens einen Behälter mit Mitteln zur Wasserbehandlung, die insbesondere eine periodische Regeneration erfordern,
- ein Ventilsystem zum Steuern von Volumenströmen in der Wasserbehandlungsanlage mit einem beweglichen Steuerelement, sowie einem in einem Gehäuse des Ventilsystems stationär angeordneten Gegenelement, wobei das Steuerelement an dem Gegenelement dichtend anliegt und nacheinander, periodisch wiederholt in mindestens zwei Betriebspositionen eines Betriebszyklus mit unterschiedlich ausgestalteten Ventilfunktionen relativ zum Gegenelement bewegt werden kann,
- einen Sensor zur Bestimmung der aktuellen Position des Steuerelements relativ zum Gegenelement.

Eine solche Wasserbehandlungsanlage ist aus der DE 42 27 135 C2 (=Referenz [1]) oder auch aus der 25 Jahre jüngeren WO 2017/117026 A1 (=Referenz [2]) bekannt.

In Haushalten oder auch in technischen Anlagen wird aus vielfältigen Gründen oftmals behandeltes, insbesondere enthärtetes Wasser gewünscht oder benötigt. Häufig werden dafür Wasserenthärtungsanlagen eingesetzt, die auf Ionentauscherharz basieren. Ein Ionentauscher nimmt die Härtebildner (Calzium- und Magnesiumionen) auf und gibt dafür nicht härtebildende Ionen (meist Natriumionen) ab. Das Ionentauscherharz kann dabei nur eine begrenzte Menge an Härtebildnern binden (Erschöpfung des Ionentauscherharzes) und muss daher von Zeit zu Zeit regeneriert werden. Für die Regeneration wird typischerweise das Ionentauscherharz einer Salzsole ausgesetzt. Während der Regeneration kann das Ionentauscherharz keine Enthärtungsfunktion wahrnehmen. In der EP 2 385 020 B1 (=Referenz [3]) wird die Regeneration eines Ionentauscherharzes einer Enthärtungsvorrichtung beschrieben, wobei eine Salzsole während ihres Transports zur Enthärtungsvorrichtung in einen Strom von Verdünnungswasser zudosiert wird.

Aus technischen oder wirtschaftlichen Gründen ist es oft notwendig oder erwünscht, kein vollenthärtetes Wasser, sondern Wasser mit einer mittleren, jedoch eng definierten Wasserhärte zur Verfügung zu haben. So kann vollständig enthärtetes Wasser zu Korrosionsproblemen führen, wenn eine Schutzschichtbildung in der nachgeschalteten Rohrleitungsinstallation nicht mehr möglich ist. Zudem wird bei einer Vollenthärtung die Kapazität des Enthärters schnell erschöpft, und es muss frühzeitig regeneriert werden. Dies ist mit einem hohen Salzverbrauch und damit hohen Kosten verbunden. Zur Durchführung einer Teilenthärtung werden -wie etwa in der EP 3 083 503 A1 (=Referenz [4]) beschrieben- automatische Verschneideeinrichtungen zum Mischen von enthärtetem Wasser (auch als Reinwasser oder Weichwasser bezeichnet) und Rohwasser eingesetzt. In der Regel ist es erwünscht, die Wasserhärte im Verschnittwasser, das ist das Gemisch von enthärtetem Wasser und Rohwasser, auf einen vorgegebenen Sollwert einzustellen.

Eine weitere Art der Wasserbehandlung kann eine Filtration des Wassers umfassen. Wasserfilter, wie sie üblicherweise in einer Trinkwasserinstallation eingesetzt werden, filtern ungelöste Partikel wie Rostteilchen oder Sandkörner aus dem Wasser. Die Partikel bleiben dabei an einem Siebfilter mit Durchlässen, die enger sind als die auszufilternden Partikel, hängen. Diese Filtration führt in Abhängigkeit von der Betriebszeit und der Wasserqualität zum Aufbau eines so genannten Filterkuchens am Siebfilter. Daher müssen die Filter von Zeit zu Zeit gereinigt werden, was in der Regel durch eine -automatisierbare- mechanische Abreinigung des Siebfilters mittels Rückspülung der betroffenen Filtereinheit erfolgt. Einen solchen rückspülbaren Wasserfilter beschreibt beispielsweise die EP 1 110 589 B1 (=Referenz [5]).

Um diese Arten der Wasserbehandlung möglichst auch automatisierbar durchführen zu können, sind entsprechend ausgebildete, in der Regel elektronisch ansteuerbare, Ventilsysteme zur gewünschten Steuerung von Flüssigkeitsströmen in der Wasserbehandlungsanlage erforderlich.

Die eingangs zitierte gattungsbildende DE 42 27 135 C2 (=Referenz [1]) beschreibt ein Ventilsystem für eine Ionenaustauscheranlage mit einem Paar von relativ zueinander um eine gemeinsame Achse drehbaren Scheiben, die Durchgangsöffnungen und Kanäle aufweisen. In unterschiedlichen Drehwinkeln, d.h. in unterschiedlichen Winkel-Positionen der Scheiben zueinander, werden unterschiedliche Öffnungen und Kanäle der beiden Scheiben miteinander verbunden. Auf diese Weise wird die Ventilfunktion realisiert. Ist eine der beiden Scheiben fest angeordnet und die andere Scheibe drehbar, so werden bei einer vollen Umdrehung der beweglichen Scheibe, also einer Drehung um 360°, alle auf dem Scheibenpaar integrierten Ventilfunktionen einmal geschaltet. Zur Erfassung der Position der beweglichen Scheibe und zur Steuerung des Ventilsystems dient beispielsweise ein Nockenschalter.

Auch die -ebenfalls gattungsbildende- WO 2017/117026 A1(=Referenz [2]) offenbart ein Steuerventil für ein Wasserbehandlungssystem mit einer stationären Scheibe und einer durch einen Elektromotor drehbar antreibbaren Regenerationssteuerscheibe. Die Bestimmung der Position der Regenerationssteuerscheibe erfolgt mittels eines an die Regenerationsscheibe gekoppelten Kodierrades und einem optischen, magnetischen oder anderen Sensor. Zur sicheren Vermeidung einer Umkehr der Rotationsrichtung der Regenerationsscheibe relativ zur stationären Scheibe ist zudem eigens eine Sperrklinke ("anitreverse pawl") vorgesehen.

Speziell die Verwendung eines Hall-Sensors oder eines optischen Sensors zum Erfassen des Drehwinkels eines Signalgeberrads wird -allerdings in einem von der Wasserbehandlung völlig unterschiedlichen technischen Zusammenhangetwa in DE 10 2016 208 649 A1 (=Referenz [6]) näher erläutert.

Nachteilig bei den bekannten Wasserbehandlungsanlagen ist, dass ausgehend von einer ersten Betriebsphase immer eine Rotation des Steuerelements um einen vollen Kreis (360°) und somit ein Durchlaufen aller weiteren Betriebsphasen erforderlich ist.

### Aufgabe der Erfindung

Demgegenüber ist es Aufgabe der vorliegenden Erfindung, ein Verfahren der eingangs definierten Art für eine Wasserbehandlungsanlage mit einem Ventilsystem zum Steuern der Volumenströme auf technisch möglichst einfache und kostengünstige Weise so zu modifizieren, dass damit ein schnelleres Einstellen einer anderen Betriebsposition ausgehend von einer vorherigen Betriebsposition ermöglicht wird, wobei die aktuelle Position des Steuerelements auf einfache Art und Weise exakt bestimmt werden kann und damit unerwünschte Ventilstellungen sicher vermieden werden.

### Kurze Beschreibung der Erfindung

Diese Aufgabe wird erfindungsgemäß gelöst durch ein Verfahren zum Betrieb einer Wasserbehandlungs-anlage der eingangs genannten Art, die dadurch gekennzeichnet ist, dass eine Vorrichtung zur Umkehrung der Bewegungsrichtung des Steuerelements relativ zum Gegenelement vorhanden ist, mittels welcher die Bewegungsrichtung des Steuerelements pro Betriebszyklus mindestens einmal umgekehrt werden kann, und dass mit dem Sensor zur Bestimmung der aktuellen Position des Steuerelements relativ zum Gegenelement eine Referenzposition des Steuerelements bestimmt werden kann, wobei die Referenzposition zu den einzelnen Betriebspositionen jeweils um einen Abschnitt x > 0 versetzt ist. Das Steuerelement ist so ausgebildet, dass die Referenzposition räumlich zwischen zwei der Betriebspositionen angeordnet ist und dass das Steuerelement aus der Referenzposition einerseits in einer Richtung zu einer der Betriebspositionen, andererseits aber auch in der Gegenrichtung zu einer anderen dieser Betriebspositionen bewegt wird.

Mit dem erfindungsgemäßen Verfahren wird sichergestellt, dass keine unerwünschten Verbindungen zwischen bestimmten Öffnungen und Kanälen auf den in der Regel scheibenförmigen Elementen hergestellt werden. Unerwünschte Verbindungen können beispielsweise zu einem unkontrollierten Verschnitt von behandeltem und unbehandeltem Wasser oder zu einer Verbindung eines Spülkanals mit einem Kanal für behandeltes Wasser führen. Um dies zu vermeiden, kann es notwendig sein, die Steuerscheibe abhängig vom Aufbau des Ventilsystems lediglich in bestimmten Winkelbereichen zu bewegen. Eine volle Umdrehung (Drehung um 360°) zur Realisierung aller Ventilfunktionen ist in diesem Fall dann nicht möglich. Ein Motor, der die Steuerscheibe antreibt, muss folglich in beide Richtungen drehen können, damit sämtliche Stellungen der Steuerscheibe, die für den Betrieb und die Regeneration einer Wasserbehandlungsanlage notwendig sind, angesteuert werden können.

Je nach Aufbau der Steuerscheibe kann eine Umkehr der Motordrehrichtung auch dafür sinnvoll sein, um die nächste Position auf kürzerem, möglichst auf kürzestem Wege anzufahren, was wiederum Zeit einspart und vor allem den Verschleiß der Anlage reduziert.

Ändert sich bei einem Motor die Drehrichtung, so tritt aufgrund von mechanischer Hysterese ein Spiel (Bewegungsfreiraum) zwischen der Steuerscheibe und mechanischen Komponenten auf, die zur Weiterleitung des Antriebsmomentes des Motors dienen. Als Folge davon kann es nach Umkehr der Drehrichtung zu Ungenauigkeiten beim Drehen der Steuerscheibe von einer Ventilfunktion (z.B. Enthärtungsbetrieb einer Wasserenthärtungsanlage) in eine folgende Ventilfunktion (z.B. Regenerationsbetrieb der Wasserenthärtungsanlage) kommen. Wird eine erste Betriebsposition, beispielsweise mittels eines (Hall-)Sensors, exakt bestimmt (="Referenzposition"), so kann die folgende weitere Betriebsposition aufgrund des Spiels nach Umkehr der Drehrichtung nicht mehr exakt angesteuert werden, obwohl der erforderliche Drehwinkel und die Drehgeschwindigkeit des Motors durchaus bekannt sind. Für die exakte Bestimmung der weiteren Betriebsposition müsste dann ein zweiter Sensor herangezogen werden. Dieser wird durch die vorliegende Erfindung eingespart.

Das bewegliche Steuerelement und das stationär angeordnete Gegenelement können aus dem gleichen, aber bei speziellen Einsatzzwecken auch aus unterschiedlichem Material sein. Prinzipiell können Kunststoffe, keramische oder metallische Werkstoffe eingesetzt werden.

### Bevorzugte Ausführungsformen und Varianten der Erfindung

Das erfindungsgemäße Verfahren nach Anspruch 1 zum Betrieb einer Wasserbehandlungsanlage zeichnet sich dadurch aus,
dass die Bewegungsrichtung des Steuerelements pro Betriebszyklus mindestens einmal umgekehrt wird,
und dass eine Referenzposition des Steuerelements mittels des Sensors bestimmt wird, wobei die Referenzposition zu den einzelnen Betriebspositionen jeweils um einen Abschnitt x > 0 versetzt ist, und wobei die aktuelle Position des Steuerelements aus der Referenzposition, der Bewegungsgeschwindigkeit v und der Laufzeit T des Elektromotors ermittelt wird.

Bevorzugt ist eine Variante des erfindungsgemäßen Verfahrens zum Betrieb einer Wasserbehandlungsanlage mit rotierender Steuerscheibe, die vorsieht, dass die Steuerscheibe mit einer Winkelgeschwindigkeit ω gegen die stationäre Gegenscheibe rotiert wird, wobei in den verschiedenen Betriebspositionen unterschiedliche Durchgangsöffnungen der Steuerscheibe und der Gegenscheibe miteinander verbunden werden, und wobei die Referenzposition zu den einzelnen Betriebspositionen jeweils um einen Drehwinkel αₓ > 0 versetzt ist.

Während eines Betriebszyklus wird die Steuerscheibe aus einer ersten Betriebsposition in mindestens eine weitere Betriebsposition gedreht, bevor sie wieder in die erste Betriebsposition zurückkehrt und ein neuer Betriebszyklus beginnt. Bei den verschiedenen Betriebspositionen sind unterschiedliche Durchgangsöffnungen der Steuerscheibe und der Gegenscheibe miteinander verbunden, so dass unterschiedliche Volumenströme durch die Wasserbehandlungsanlage realisiert werden.

Bei einer Wasserenthärtungsanlage kann beispielsweise in einer ersten Betriebsposition hartes Wasser durch die Behandlungseinheit, in der Regel ein Ionenaustauscherharz, fließen und dadurch enthärtet werden. Das enthärtete Wasser fließt anschließend durch einen Ausgang der Wasserenthärtungsanlage und steht dem Verbraucher zur Verfügung. In der zweiten Betriebsposition wird das Ionenaustauscherharz regeneriert. Hierzu fließt eine Regeneriermittellösung durch das Ionenaustauscherharz und von dort in einen Spülkanal. Der Wasserfluss der ersten Betriebsposition ist dabei unterbrochen. Nach Abschluss der Regeneration kann der Enthärtungsprozess fortgeführt werden. Hierzu wird wieder in die erste Betriebsposition gewechselt und ein neuer Betriebszyklus beginnt.

Um von der zweiten Betriebsposition in die erste Betriebsposition zurückzukehren, könnte die Steuerscheibe prinzipiell weitergedreht werden, bis die erste Betriebsposition wieder erreicht wird, wie es aus dem Stand der Technik bekannt ist. Die Steuerscheibe dreht dann ausschließlich in eine Richtung, um sämtliche Betriebspositionen zu realisieren. Mit der vorliegenden Erfindung wird es allerdings ermöglicht, die Steuerscheibe mittels Umkehr der Rotationsrichtung zurückzudrehen, um die erste Betriebsposition wieder zu erreichen. Die Drehrichtung der Steuerscheibe wechselt in diesem Fall während eines Betriebszyklus.

Eine Umkehr der Drehrichtung findet insbesondere dann statt, wenn bestimmte Stellungen von Steuerscheibe und Gegenscheibe zueinander zu unzulässigen Verbindungen von Durchgangsöffnungen führen würden. Bei einer Rotation der Steuerscheibe ohne Änderung der Drehrichtung muss diese eine volle Umdrehung (Drehung um 360°) ausführen, um zum Ausgangspunkt zurückzukommen. Dabei würden zwangsweise auch unerwünschte Stellungen der beiden Scheiben zueinander zumindest kurzzeitig realisiert werden. Darüber hinaus können durch Umkehr der Drehrichtung einzelne Positionen je nach Lage der Durchgangsöffnungen auf kürzestem Weg angefahren werden, was den Verscheiß von gegeneinander beweglichen Bauteilen reduziert.

Bei Umkehr der Drehrichtung eines Motors, insbesondere eines Elektromotors, macht sich ein mechanisches Spiel (Bewegungsfreiraum) zwischen den einzelnen Antriebskomponenten bemerkbar, was dazu führt, dass eine gewisse Zeit nach Umkehr der Motordrehrichtung vergeht, bis die Steuerscheibe beginnt sich zu drehen. Dadurch kann nach Umkehr der Drehrichtung die Position der Steuerscheibe nicht exakt aus der Laufzeit T und der Winkelgeschwindigkeit ω des Motors abgeleitet werden.

Es ist aber jederzeit möglich, mit Hilfe der Bestimmung einer Referenzposition der Steuerscheibe jede Betriebsposition exakt anzusteuern, ohne dass für jede Betriebsposition ein separater Sensor benötigt wird.

### Beispiel:

Eine Wasserenthärtungsanlage enthärtet in einer ersten Betriebsposition hartes Wasser, während in einer zweiten Betriebsposition eine Regeneration der Anlage stattfindet. Um von der ersten in die zweite Betriebsposition zu wechseln, muss die Steuerscheibe um 60° gedreht werden. Dazwischen liegt die mittels eines Sensors genau bestimmbare Referenzposition, die von der ersten Betriebsposition um einen Winkel α₁ = 15° und von der zweiten Betriebsposition um einen Winkel α₂ = 45° versetzt ist. Außerhalb des Winkelbereichs von 60° werden unerwünschte Verbindungen hergestellt. Dieser Bereich darf folglich nicht angefahren werden, so dass der Motor mit einer Umkehr der Drehrichtung betrieben werden muss, damit die Steuerscheibe periodisch wiederholt in sämtliche Betriebspositionen gedreht werden kann.

Weiterhin wird eine Winkelgeschwindigkeit ω des Motors von 1°/s angenommen. Überschreitet die Steuerscheibe die Referenzposition, so erreicht diese die erste Betriebsposition nach 15 Sekunden (Laufzeit T des Motors = 15 Sekunden), die zweite Betriebsposition wird ausgehend von der Referenzposition nach 45 Sekunden erreicht (Laufzeit T = 45 Sekunden). Für die Drehung der Steuerscheibe von der ersten Betriebsposition bis zur Referenzposition werden beispielsweise 20 Sekunden benötigt, bis der Sensor das Erreichen der Referenzposition signalisiert, da der Motor beim Start in der ersten Betriebsposition seine Drehrichtung geändert hat und damit ein Spiel auftritt.

Das Spiel bewirkt eine um 5 Sekunden längere Laufzeit T des Motors. Das heißt, die tatsächliche Position der Steuerscheibe weicht um 5° von der Position ab, die sich ohne Berücksichtigung eines Spiels aus der Winkelgeschwindigkeit ω und der Laufzeit T des Motors ableiten lässt. Für die Drehung der Steuerscheibe von der zweiten Betriebsposition bis zur Referenzposition gilt Analoges.

Die Referenzposition wird bestimmt während die Steuerscheibe sich über diese Position hinwegdreht. Man erhält ein Signalmaximum, das unabhängig von der absoluten Signalstärke exakt ermittelt werden kann (1. Ableitung gleich Null). Der Sensor ist typischerweise ortsfest im oder am Gehäuse des Ventilsystems angebracht, während ein Signalgeber auf der drehbaren Steuerscheibe angeordnet ist und am Sensor vorbeidreht.

Eine bevorzugte Weiterentwicklung dieser Variante sieht vor, dass die Steuerscheibe periodisch wiederholt in mindestens drei Betriebspositionen mit unterschiedlichen Ventilfunktionen gedreht wird, wobei die Steuerscheibe nach einer Umkehr der Drehrichtung die Referenzposition vor der nächstfolgenden Betriebsposition erreicht. So kann in einer ersten Betriebsposition das zu behandelnde Wasser behandelt werden, in einer zweiten Betriebsposition werden die Mittel zur Wasserbehandlung mit Regeneriermittellösung beaufschlagt und in einer dritten Betriebsposition wird die Wasserbehandlungsanlage einem Spülprozess unterzogen.

Vorteilhaft ist weiterhin eine Variante des erfindungsgemäßen Verfahrens zum Betrieb einer Wasserbehandlungsanlage mit Motor, vorzugsweise Elektromotor, bei der ein Spiel des Motors nach Umkehr der Bewegungsrichtung ermittelt wird mit folgenden Schritten
a) Experimentelle Bestimmung der Laufzeit Tₑₓₚ des Motors nach Umkehr der Bewegungsrichtung bis das Steuerelement die Referenzposition erreicht,
b) Berechnung der theoretischen Laufzeit Tₜₕₑₒ des Motors aus der Bewegungsgeschwindigkeit v und der Strecke zwischen Umkehrposition und Referenzposition,
c) Ermittlung des Spiels aus der Differenz Tₑₓₚ - Tₜₕₑₒ und der Bewegungsgeschwindigkeit v,
wobei das ermittelte Spiel für mindestens eine nachfolgende Positionsbestimmung nach einer weiteren Umkehr der Bewegungsrichtung herangezogen wird.

Das Spiel eines Motors ändert sich nicht so schnell, dass es nach jeder Umkehr der Bewegungsrichtung neu ermittelt werden muss.

Falls eine zusätzliche Betriebsposition (z.B. ein Spülschritt wie das Erstfiltrat bei einer Wasserenthärtungsanlage) konstruktionstechnisch, etwa aus Platzgründen, vorteilhaft derart angeordnet ist, dass das Steuerelement diese Position nach Umkehr der Bewegungsrichtung vor der Referenzposition erreicht, so kann das bei einer vorherigen Umkehr der Bewegungsrichtung ermittelte Spiel herangezogen werden, um diese zusätzliche Betriebsposition exakt anzusteuern.

Diese Verfahrensvariante kann vorteilhaft dadurch weitergebildet werden, dass eine Alarmmeldung erfolgt, wenn das ermittelte Spiel des Motors bzw. dessen Änderung einen vorgegebenen Grenzwert GW überschreitet. Damit kann das Bedienungspersonal der Wasserbehandlungsanlage in einfacher Weise auf den aufgetretenen Fehler aufmerksam gemacht werden.

Zeigt der Motor zu große Verschleißerscheinungen, so ist nämlich ein ordentlicher Betrieb der Wasserbehandlungsanlage mit exakter Ansteuerung der einzelnen Betriebspositionen nicht mehr gewährleistet.

Bei Verwendung einer Steuerscheibe als Steuerelement kann beispielsweise ein Spiel des Motors bis zu 10° akzeptabel sein. Ebenso kann aus mehreren ermittelten Spielen ein Mittelwert gebildet werden und bei einer Abweichung von mehr als 30%, insbesondere mehr als 50% vom Mittelwert davon ausgegangen werden, dass der Verschleiß des Motors fortgeschritten ist.

Durch den Alarm kann ein Benutzer der Wasserbehandlungsanlage auf einen Defekt hingewiesen werden. Als Alarm kann ein optisches und/oder akustisches und/oder elektrisches Signal und/oder Funksignal (beispielsweise an ein Mobiltelefon oder an die Leitwarte eines Gebäudes) eingesetzt werden. Zusätzlich zur Alarmmeldung kann die Wasserbehandlung abgebrochen werden und der Wasserfluss gesperrt oder über einen Bypass geleitet werden, so dass zumindest unbehandeltes Wasser für die nachfolgende Installation zur Verfügung steht.

Günstig für die Anwendung des erfindungsgemäßen Verfahrens, insbesondere im Hinblick auf eine Automatisierung, ist es auch, wenn die vom Sensor erfassten Signale einer elektronischen Auswertung unterzogen und die ausgewerteten Signale zur Bestimmung der aktuellen Position des Steuerelements herangezogen werden.

Die Signale weisen ein gewisses Rauschen auf, was die exakte Bestimmung der Referenzposition des Steuerelements und damit der Betriebspositionen erschwert.

Als Auswertung kommen Methoden zur Glättung der Mess-Signale in Frage wie z.B. die Bildung eines gleitenden Mittelwertes. Die Auswertung beansprucht eine gewisse Zeit, während der der Motor in der Regel weiterläuft. Dadurch, dass die Betriebsposition, also die Stopp-Position des Steuerelements, zeitlich nach der Referenzposition erreicht wird, steht für die Auswertung der Signale genügend Zeit zur Verfügung. Durch Verwendung der ausgewerteten Signale kann die Betriebsposition genauer bestimmt werden.

Weiterhin kann zur Bestimmung der Referenzposition nicht der eigentliche Messwert, sondern dessen zeitliche Änderung beim Überfahren dieser Position verwendet werden. Ist die 1. Ableitung gleich Null und die 2. Ableitung kleiner Null, so handelt es sich um das Maximum der Signalstärke. Die Referenzposition kann so exakt bestimmt werden unabhängig von der Amplitude des eigentlichen Messwertes.

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

### Detaillierte Beschreibung der Erfindung und Zeichnung

Die Erfindung ist in der Zeichnung dargestellt und wird anhand von Ausführungsbeispielen näher erläutert. Es zeigen:
- Fig. 1: eine schematische Draufsicht auf eine Ausführungsform einer Steuerscheibe für eine zum Betrieb durch das erfindungsgemäße Verfahren geeignete Wasserenthärtungs-anlage;
- Fig. 2: eine räumliche Draufsicht von schräg oben auf ein Gehäuse mit eingebautem Ventilsystem für eine derartige Wasser-enthärtungsanlage, insbesondere mit einer -unter einer hier nicht dargestellten Steuerscheibe angeordneten- starr mit dem Gehäuse verbundenen Gegenscheibe;
- Fig. 3a-c: eine Darstellung der jeweiligen Abfolge bei Drehung einer Steuerscheibe dreier verschiedener Anordnungen von jeweils drei Betriebspositionen;
- Fig. 4: eine schematische Darstellung der Signalstärke S eines Sensors zur Bestimmung der aktuellen Position des Steuerelements in Abhängigkeit vom Drehwinkel α der Steuerscheibe; und
- Fig. 5: ein Schema des Signalbereichs des Sensors bei Drehung der Steuerscheibe mit einer Referenzposition in der Nähe eines Umkehrpunktes.

Die vorliegende Erfindung befasst sich mit dem Gebiet der Wasserbehandlung und betrifft eine neuartige Ausgestaltung eines Verfahrens zum Betrieb einer Wasserbehandlungsanlage, insbesondere eine Wasser-Enthärtungs- oder eine Wasser-Filter-Einrichtung, mit mindestens einem Behälter mit den entsprechenden Mitteln zur Wasser-behandlung, die insbesondere eine periodische Regeneration erfordern, einem Ventilsystem zum Steuern von Volumenströmen in der Wasserbehandlungs-anlage mit einem beweglichen **Steuerelement 1,** sowie einem in einem **Gehäuse 4** des Ventilsystems stationär angeordneten **Gegenelement 5,** wobei das Steuerelement 1 an dem Gegenelement 5 dichtend anliegt und nacheinander, periodisch wiederholt in mindestens zwei **Betriebspositionen P1, P2, P3** eines Betriebszyklus mit unterschiedlich ausgestalteten Ventilfunktionen relativ zum Gegenelement 5 bewegt werden kann, sowie einem **Sensor 6** zur Bestimmung der aktuellen Position des Steuerelements 1 relativ zum Gegenelement 5.

Diese Anordnung von Ventilsystemen zum Steuern von Volumenströmen zeichnet sich dadurch aus, dass eine Vorrichtung zur Umkehrung der Bewegungsrichtung des Steuerelements 1 relativ zum Gegenelement 5 vorhanden ist, mittels welcher die Bewegungsrichtung des Steuerelements 1 pro Betriebszyklus mindestens einmal umgekehrt werden kann, und dass mit dem Sensor 6 eine **Referenzposition R** des Steuerelements 1 bestimmt werden kann, wobei die Referenzposition R zu den einzelnen Betriebspositionen P1, P2, P3 jeweils um einen Abschnitt x>0 versetzt ist.

Das Steuerelement 1 des Ventilsystems kann mittels eines -in der Zeichnung nicht eigens dargestellten- Motors, vorzugsweise eines Elektromotors, insbesondere eines Schrittmotors, automatisierbar bewegt werden. Die Position des Steuerelements 1 kann dann aus der Referenzposition R, der **Bewegungsgeschwindigkeit v** des Steuerelements 1 sowie aus der **Laufzeit T** des Motors ermittelt werden.

In den Figuren der Zeichnung auch nicht dargestellt sind zwischen dem Steuerelement 1 und dem Gegenelement 5 angeordnete Dicht- und/oder Gleitelemente.

Ausführungsformen eines solchen Ventilsystems -die in der Zeichnung ebenfalls nicht dargestellt sind- können ein Steuerelement umfassen, welches als linear hin- und her bewegbarer Steuerkolben ausgebildet ist.

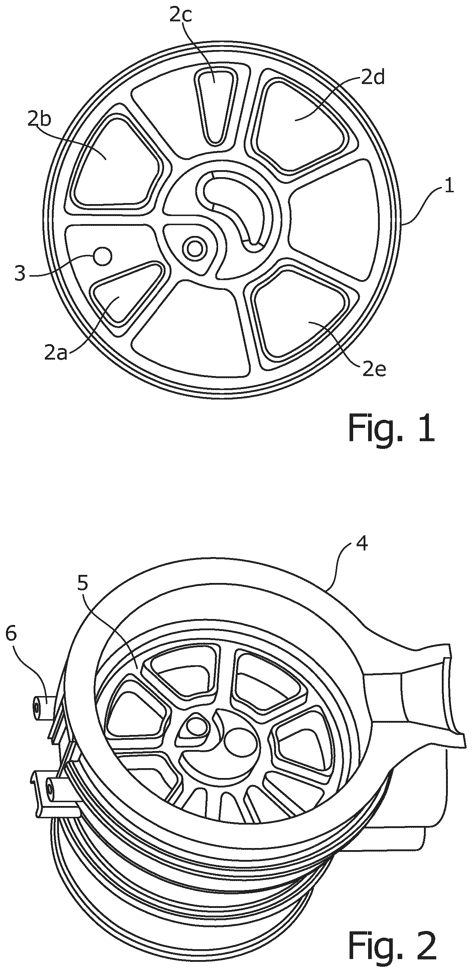

Die vorliegenden **Figuren 1 und 2** stellen eine alternative Ausführungsform zu obigem Fall dar: Hier sind das Steuerelement 1 als eine rotierbare Steuerscheibe mit mehreren **Durchgangsöffnungen 2a, 2b, 2c, 2d, 2e** und das Gegenelement 5 als eine stationär angeordnete Gegenscheibe mit mehreren anderen Durchgangsöffnungen ausgebildet, wobei die Referenzposition R zu den einzelnen Betriebspositionen P1, P2, P3 jeweils um einen **Drehwinkel** αₓ > 0°, vorzugsweise αₓ ≥ 5°, insbesondere αₓ ≥ 10°, versetzt ist. Weiterhin sollte für einen Drehwinkel α₁ gelten: α₁ < B/2, mit α₁: Drehwinkel bezogen auf eine der Betriebspositionen P1, P2, P3, die den zulässigen Drehbereich der Steuerscheibe begrenzen und **B: Breite des** vom Sensor 6 **erfassten Signals** der **Signalstärke S.**

Der Sensor 6 kann als relativ zum Gehäuse 4 des Ventilsystems, insbesondere relativ zum Gegenelement 5, ortsfest angeordneter Hall-Sensor, optischer Sensor, induktiver Sensor, Ultraschall-Sensor oder Radar-Sensor ausgebildet sein. Bei Ausführungsformen mit einem Hall-Sensor wird in der Regel ein **Magnet 3** derart auf oder in dem beweglichen Steuerelement 1 positioniert sein, dass der Hall-Sensor ein Signalmaximum erfasst, wenn sich das Steuerelement 1 in der Referenzposition R befindet.

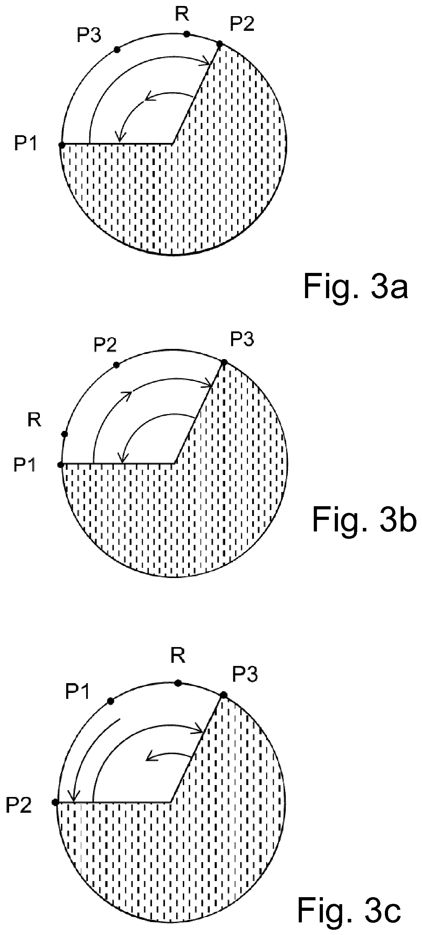

**Fig. 3a** zeigt die Abfolge der Drehung einer Steuerscheibe bei einer ersten Anordnung von drei Betriebspositionen bei einer Wasserenthärtungsanlage:
- P1:: Wasserbehandlung
- P2:: Regeneration
- P3:: Spülung der Behandlungsanlage
- R:: Referenzposition

In einer ersten Betriebsposition P1 wird das zu behandelnde Wasser -beispielsweise mittels Durchleiten durch einen Ionentauscher zur Wasserenthärtung - behandelt, in einer zweiten Betriebsposition P2 werden die Mittel zur Wasserbehandlung mit Regeneriermittellösung beaufschlagt und in einer dritten Betriebsposition P3 wird die Wasserbehandlungsanlage einem Spülprozess unterzogen.

Die erste Betriebsposition (Behandlung) und die zweite Betriebsposition (Regeneration) begrenzen den Winkelbereich, in dem die Steuerscheibe gedreht wird, die dritte Betriebsposition (Spülung) liegt dazwischen. Die Referenzposition befindet sich hier zwischen der zweiten und der dritten Betriebsposition. Daraus ergibt sich folgende periodisch wiederholende Abfolge: ... Referenzposition - Regeneration - Umkehr - Referenzposition - Spülung - Behandlung - Umkehr - Referenzposition...

Die Steuerscheibe erreicht nach einer Umkehr der Drehrichtung immer zuerst die Referenzposition R, so dass jede Betriebsposition P1, P2, P3 exakt bestimmt werden kann.

**Fig. 3b** zeigt die Abfolge der Drehung einer Steuerscheibe bei einer zweiten Anordnung von drei Betriebspositionen:
Die erste Betriebsposition (Behandlung) und die dritte Betriebsposition (Spülung) begrenzen den Winkelbereich, in dem die Steuerscheibe gedreht wird, die zweite Betriebsposition (Regeneration) liegt dazwischen. Die Referenzposition befindet sich hier zwischen der ersten und der zweiten Betriebsposition. Daraus ergibt sich folgende Reihenfolge: ... Referenzposition - Regeneration - Spülung - Umkehr - Referenzposition - Behandlung - Umkehr - Referenzposition... Auch hier gilt: Die Steuerscheibe erreicht nach einer Umkehr der Drehrichtung immer zuerst die Referenzposition R, so dass jede Betriebsposition P1, P2, P3 exakt bestimmt werden kann.

**Fig. 3c** zeigt die Abfolge der Drehung einer Steuerscheibe bei einer dritten Anordnung von drei Betriebspositionen:
Die zweite Betriebsposition (Regeneration) und die dritte Betriebsposition (Spülung) begrenzen den Winkelbereich, in dem die Steuerscheibe gedreht wird, die erste Betriebsposition (Behandlung) liegt dazwischen. Die Referenzposition befindet sich hier zwischen der ersten und der dritten Betriebsposition. Daraus ergibt sich folgende Reihenfolge: ... Referenzposition - Spülung - Umkehr - Referenzposition -Behandlung - Regeneration - Umkehr - Referenzposition...

Wiederum gilt: Die Steuerscheibe erreicht nach einer Umkehr der Drehrichtung immer zuerst die Referenzposition R, so dass jede Betriebsposition P1, P2, P3 exakt bestimmt werden kann.

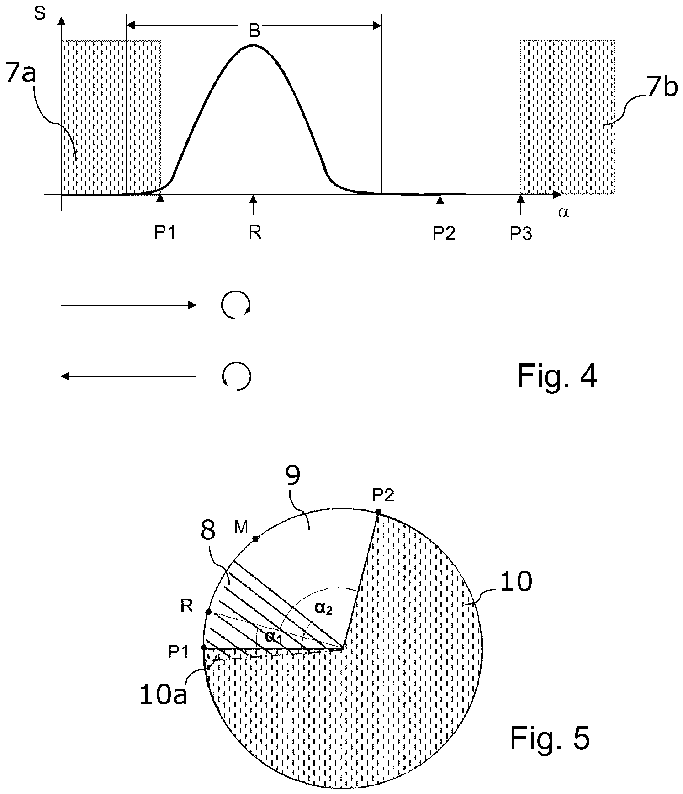

**Fig. 4** stellt die von einem Sensor 6 erfasste Signalstärke S der Signalbreite B in Abhängigkeit vom Drehwinkel α der Steuerscheibe dar. Positive Entwicklung (Zunahme) des Drehwinkels α bedeutet hierbei eine Drehung der Steuerscheibe im Uhrzeigersinn, während eine negative Entwicklung (Abnahme) eine Drehung der Steuerscheibe gegen den Uhrzeigersinn anzeigt. **Bereiche 7a, 7b** mit **unzulässigen Stellungen** der Steuerscheibe relativ zur Gegenscheibe ergeben sich für Drehwinkel α vor der Betriebsposition P1 sowie nach der Betriebsposition P3.

Befindet sich die Steuerscheibe in einer unbekannten Stellung, etwa bei Betriebsstart oder nach Unterbrechung der Energieversorgung, so kann die Steuerscheibe in eine bekannte Betriebsposition gedreht werden, ohne dass Bereiche überfahren werden, in denen unzulässige Verbindungen von Durchgangsöffnungen gebildet werden:
Nach Einschalten der Netzspannung wird:
a) kein Signal registriert
   Die Steuerscheibe steht in der Nähe von (oder auf) Betriebsposition P2 oder P3. Die Steuerscheibe wird gegen den Uhrzeigersinn gedreht, bis die Referenzposition R erreicht ist (maximale Signalstärke).
b) eine Signalstärke > 0 registriert
   Die Steuerscheibe befindet sich in der Nähe von (oder auf) der Betriebsposition P1. Die Steuerscheibe wird um einen kleinen Winkel (z.B. α=2°) im Uhrzeigersinn gedreht. Dabei können 3 Fälle auftreten:
   Fall 1: Die Signalstärke S nimmt zu. Die Steuerscheibe wird in diesem Fall weitergedreht, bis die maximale Signalstärke erreicht ist. Die Steuerscheibe befindet sich dann in der Referenzposition R.
   Fall 2: Die Signalstärke S nimmt ab. Die Drehrichtung wird gewechselt. Die Steuerscheibe wird jetzt gegen den Uhrzeigersinn gedreht, bis die Referenzposition R erreicht ist (Signalmaximum).
   Fall 3: Die Signalstärke S bleibt unverändert. Die Steuerscheibe hat sich aufgrund eines Spiels zwischen den einzelnen Antriebskomponenten tatsächlich gar nicht gedreht. Es wird wiederholt um einen kleinen Winkel α gedreht, bis sich die Signalstärke S ändert. Weiteres Vorgehen dann gemäß Fall 1 bzw. Fall 2.

**Fig. 5** schließlich illustriert den Signalbereich bei Drehung einer Steuerscheibe mit einer Referenzposition R in der Nähe eines Umkehrpunktes. Die **Mitte M des zulässigen Positionsbereiches** befindet sich zwischen den Betriebspositionen P1 und P2, genauer zwischen der Referenzposition R und Betriebsposition P2.

Durch Vor- und Zurück-Drehung der Steuerscheibe um 105° werden zwei Betriebspositionen P1 und P2 periodisch wiederholt angefahren. Für den Wechsel von Betriebsposition P1 (z.B. Enthärtungsbetrieb) in Betriebsposition P2 (z.B. Regenerationsbetrieb) wird die Steuerscheibe im Uhrzeigersinn gedreht und umgekehrt.

Die Referenzposition R befindet sich zwischen den beiden Betriebspositionen P1 und P2 mit α₁ = 15°. Für α₂ zwischen R und P2 ergibt sich dann 90°. Der tatsächlich vermessene **Signalbereich 8** des von einem Sensor um den Referenzpunkt R erfassten Signals mit einer Breite B = 40° reicht bis in den unzulässigen Bereich 10a in der Nähe der Betriebsposition P1. Die Steuerscheibe befindet sich in einer unbekannten Stellung innerhalb des zulässigen Positionsbereichs. Nach Einschalten der Netzspannung sind folgende Ereignisse möglich:
a) Es wird kein Signal registriert
   Die Steuerscheibe befindet sich in einem **Bereich 9 ohne Signal.** Die Steuerscheibe wird gegen den Uhrzeigersinn gedreht, bis die Referenzposition R erreicht ist (maximale Signalstärke).
b) Es wird eine Signalstärke > 0 registriert
   Die Steuerscheibe befindet sich im Signalbereich 8, jedoch nicht im **unzulässigen Bereich 10a mit Signal.** Die Steuerscheibe wird um einen kleinen Winkel (z.B. α=2°) im Uhrzeigersinn gedreht. Dabei können 3 Fälle auftreten:
   Fall 1: Die Signalstärke nimmt zu. Die Steuerscheibe wird in diesem Fall weitergedreht, bis die Referenzposition R mit maximaler Signalstärke erreicht ist.
   Fall 2: Die Signalstärke nimmt ab. Die Drehrichtung wird gewechselt. Die Steuerscheibe wird jetzt gegen den Uhrzeigersinn gedreht, bis die Referenzposition R erreicht ist (Signalmaximum).
   Fall 3: Die Signalstärke bleibt unverändert. Die Steuerscheibe hat sich aufgrund eines Spiels zwischen den einzelnen Antriebskomponenten tatsächlich gar nicht gedreht. Es wird wiederholt um einen kleinen Winkel α gedreht, bis sich die Signalstärke ändert. Weiteres Vorgehen dann gemäß Fall 1 bzw. Fall 2.

Befindet sich dagegen die Referenzposition R in die Nähe der Mitte M des zulässigen Positionsbereiches (in Fig. 5 nicht dargestellt), so wird weder in Betriebsposition P1 noch in Betriebsposition P2 ein Signal registriert. Wird bei dieser Anordnung nach Einschalten der Netzspannung kein Signal registriert, so kann nicht festgestellt werden, in welche Richtung die Steuerscheibe gedreht werden muss, um die Referenzposition R zu erreichen, ohne den **gesamten unzulässigen Bereich 10** zu überfahren.

### Bezugszeichenliste

- 1: bewegliches Steuerelement für eine Wasserenthärtungsanlage
- 2a, b, c, d, e: Durchgangsöffnungen einer rotierbaren Steuerscheibe
- 3: Magnet auf dem beweglichen Steuerelement
- 4: Gehäuse eines Ventilsystems
- 5: stationär angeordnetes Gegenelement zum beweglichen Steuerelement
- 6: Sensor, insbesondere Hall-Sonde mit Halterung
- 7a, b: Bereiche mit unzulässigen Stellungen der beiden Scheiben zueinander
- 8: Signalbereich
- 9: Bereich ohne Signal
- 10: gesamter unzulässiger Bereich
- 10a: unzulässiger Bereich mit Signal

- R: Referenzposition
- M: Mitte des zulässigen Positionsbereiches
- P1, P2, P3: Betriebspositionen, insbesondere:
P1: Wasserbehandlung
P2: Regeneration des Ionentauscherharzes
P3: Spülung
- v: Bewegungsgeschwindigkeit des beweglichen Steuerelements
- αₓ: Drehwinkel der Steuerscheibe in die Betriebsposition x
- ω: Winkelgeschwindigkeit der Steuerscheibe bei Rotation gegen die stationäre Gegenscheibe
- B: Breite des vom Sensor erfassten Signals
- S: Signalstärke
- T: Laufzeit eines Motors
- Tₑₓₚ: experimentell bestimmte Laufzeit des Motors nach Umkehr der Bewegungsrichtung bis das Steuerelement die Referenzposition erreicht
- Tₜₕₑₒ: theoretisch berechnete Laufzeit des Motors aus der Bewegungsgeschwindigkeit v und der Strecke zwischen Umkehrposition und Referenzposition
- GW: vorgegebener Grenzwert des Motorspiels für eine Alarmmeldung

### Referenzliste:

Für die Beurteilung der Patentfähigkeit in Betracht gezogene Druckschriften:
- [1]: DE 42 27 135 C2
- [2]: WO 2017/117026 A1
- [3]: EP 2 385 020 B1
- [4]: EP 3 083 503 B1
- [5]: EP 1 110 589 B1 ≈ DE 199 61 406 C1
- [6]: DE 10 2016 208 649 A1

## Patentansprüche

1. Verfahren zum Betrieb einer Wasserbehandlungsanlage umfassend
- mindestens einen Behälter mit Mitteln zur Wasserbehandlung, die insbesondere eine periodische Regeneration erfordern,
- ein Ventilsystem zum Steuern von Volumenströmen in der Wasserbehandlungsanlage mit einem beweglichen Steuerelement (1), sowie einem in einem Gehäuse (4) des Ventilsystems stationär angeordneten Gegenelement (5), wobei das Steuerelement (1) an dem Gegenelement (5) dichtend anliegt und nacheinander, periodisch wiederholt in mindestens zwei Betriebspositionen (P1, P2, P3) eines Betriebszyklus mit unterschiedlich ausgestalteten Ventilfunktionen relativ zum Gegenelement (5) bewegt werden kann,
- einen Sensor (6) zur Bestimmung der aktuellen Position des Steuerelements (1) relativ zum Gegenelement (5), und
- eine Vorrichtung zur Umkehrung der Bewegungsrichtung des Steuerelements (1) relativ zum Gegenelement (5),
wobei die Bewegungsrichtung des Steuerelements (1) pro Betriebszyklus mindestens einmal umgekehrt wird,
wobei eine Referenzposition (R) des Steuerelements (1) mittels des Sensors (6) bestimmt wird,
und wobei die aktuelle Position des Steuerelements (1) aus der Referenzposition (R), der Bewegungsgeschwindigkeit v und der Laufzeit T eines Motors ermittelt wird,
**dadurch gekennzeichnet,**
**dass** die Referenzposition (R) zu den einzelnen Betriebspositionen (P1, P2, P3) jeweils um einen Abschnitt x > 0 versetzt ist,
**dass** das Steuerelement (1) so ausgebildet ist, dass die Referenzposition (R) räumlich zwischen zwei der Betriebspositionen (P1, P2, P3) angeordnet ist und dass das Steuerelement (1) aus der Referenzposition (R) einerseits in einer Richtung zu einer der Betriebspositionen (P1, P2, P3), andererseits aber auch in der Gegenrichtung zu einer anderen dieser Betriebspositionen (P1, P2, P3) bewegt wird.

2. Verfahren nach Anspruch 1 zum Betrieb einer Wasserbehandlungsanlage, bei welcher das Steuerelement (1) als eine rotierbare Steuerscheibe mit mehreren Durchgangsöffnungen (2a, 2b, 2c, 2d, 2e) und das Gegenelement (5) als eine stationär angeordnete Gegenscheibe mit mehreren Durchgangsöffnungen ausgebildet sind, wobei die Referenzposition (R) zu den einzelnen Betriebspositionen (P1, P2, P3) jeweils um einen Drehwinkel αₓ > 0° versetzt ist, **dadurch gekennzeichnet, dass** die Steuerscheibe (1) mit einer Winkelgeschwindigkeit ω gegen die stationäre Gegenscheibe (5) rotiert wird, wobei in den verschiedenen Betriebspositionen (P1, P2, P3) unterschiedliche Durchgangsöffnungen (2a, 2b, 2c, 2d, 2e) der Steuerscheibe (1) und der Gegenscheibe (5) miteinander verbunden werden, und wobei die Referenzposition (R) zu den einzelnen Betriebspositionen (P1, P2, P3) jeweils um einen Drehwinkel αₓ > 0 versetzt ist.

3. Verfahren nach Anspruch 2, **dadurch gekennzeichnet, dass** die Steuerscheibe (1) periodisch wiederholt in mindestens drei Betriebspositionen (P1, P2, P3) mit unterschiedlichen Ventilfunktionen gedreht wird, wobei die Steuerscheibe (1) nach einer Umkehr der Drehrichtung die Referenzposition (R) vor der nächstfolgenden Betriebsposition erreicht.

4. Verfahren nach einem der Ansprüche 1 bis 3 zum Betrieb einer Wasserbehandlungsanlage, bei welcher ein Elektromotor, insbesondere ein Schrittmotor, zur automatisierbaren Bewegung des Steuerelements (1) vorhanden ist, **dadurch gekennzeichnet, dass** ein Spiel des Motors nach Umkehr der Bewegungsrichtung ermittelt wird mit folgenden Schritten
a) Experimentelle Bestimmung der Laufzeit Tₑₓₚ des Motors nach Umkehr der Bewegungsrichtung bis das Steuerelement (1) die Referenzposition (R) erreicht,
b) Berechnung der theoretischen Laufzeit Tₜₕₑₒ des Motors aus der Bewegungsgeschwindigkeit v und der Strecke zwischen Umkehrposition und Referenzposition (R),
c) Ermittlung des Spiels aus der Differenz Tₑₓₚ - Tₜₕₑₒ und der Bewegungsgeschwindigkeit v,
wobei das ermittelte Spiel für mindestens eine nachfolgende Positionsbestimmung nach einer weiteren Umkehr der Bewegungsrichtung herangezogen wird,
und dass vorzugsweise eine Alarmmeldung erfolgt, wenn das ermittelte Spiel des Motors bzw. dessen Änderung einen vorgegebenen Grenzwert GW überschreitet.

5. Verfahren nach einem der Ansprüche 1 bis 4, **dadurch gekennzeichnet, dass** die vom Sensor (6) erfassten Signale einer elektronischen Auswertung unterzogen werden und die ausgewerteten Signale zur Bestimmung der aktuellen Position des Steuerelements (1) herangezogen werden.

## Claims

1. Method for operating a water treatment plant comprising
- at least one container with means for water treatment requiring, in particular, periodic regeneration,
- a valve system for controlling volumetric flows in the water treatment plant, comprising a movable control element (1) and a counter-element (5) arranged in a stationary manner in a housing (4) of the valve system, the control element (1) bearing in a sealing manner against the counter-element (5) and being capable of being moved successively, periodically repeatedly into at least two operating positions (P1, P2, P3) of an operating cycle with differently configured valve functions relative to the counter-element (5),
- a sensor (6) for determining the current position of the control element (1) relative to the counter-element (5), and
- a device for reversing the direction of movement of the control element (1) relative to the counter-element (5),
wherein the direction of movement of the control element (1) is reversed at least once per operating cycle,
wherein a reference position (R) of the control element (1) is determined by means of the sensor (6),
and wherein the current position of the control element (1) is ascertained from the reference position (R), the movement speed v and the running time T of a motor,
**characterized in that**
the reference position (R) is offset from the individual operating positions (P1, P2, P3) by in each case a segment x > 0,
**in that** the control element (1) is configured so that the reference position (R) is arranged spatially between two of the operating positions (P1, P2, P3) and **in that** the control element (1) is moved on the one hand from the reference position (R) in a direction towards one of the reference positions (P1, P2, P3) but also on the second hand in the direction opposite to another of these reference positions (P1, P2, P3).

2. Method according to claim 1 for operating a water treatment plant, in which the control element (1) is configured as a rotatable control disc with a plurality of through-openings (2a, 2b, 2c, 2d, 2e) and the counter-element (5) is configured as a stationary counter-disc with a plurality of through-openings, the reference position (R) being offset relative to each of the individual operating positions (P1, P2, P3) by an angle of rotation αₓ> 0°, **characterized in that** the control disc (1) is rotated at an angular velocity ω against the stationary counter-disc (5), different through-openings (2a, 2b, 2c, 2d, 2e) of the control disc (1) and of the counter-disc (5) being connected to one another in the various operating positions (P1, P2, P3), and the reference position (R) being offset relative to each of the individual operating positions (P1, P2, P3) by an angle of rotation αₓ> 0.

3. Method according to claim 2, **characterized in that** the control disc (1) is periodically repeatedly rotated into at least three operating positions (P1, P2, P3) with different valve functions, the control disc (1) reaching, after a reversal of the direction of rotation, the reference position (R) before the next following operating position.

4. Method according to any one of claims 1 to 3 for operating a water treatment plant, in which an electric motor, in particular a stepper motor, is present for the automatable movement of the control element (1), **characterized in that,** after reversal of the direction of movement, backlash of the motor is determined with the following steps
a) experimental determination of the running time Tₑₓₚ of the motor after reversal of the direction of movement until the control element (1) reaches the reference position (R),
b) calculation of the theoretical running time Tₜₕₑₒ of the motor from the movement speed v and the distance between the reversal position and the reference position (R),
c) ascertainment of the backlash from the difference Tₑₓₚ - Tₜₕₑₒ and the movement speed v,
the ascertained backlash being used for at least one subsequent position determination after a further reversal of the direction of movement,
and **in that** preferably an alarm notification occurs, if the ascertained backlash of the motor or the change thereof exceeds a specified threshold value GW.

5. Method according to any one of claims 1 to 4, **characterized in that** the signals detected by the sensor (6) are subjected to electronic evaluation and the evaluated signals are used for determination of the current position of the control element (1).

## Revendications

1. Procédé permettant de faire fonctionner une installation de traitement de l'eau comprenant
- au moins un réservoir muni de moyens permettant le traitement de l'eau, qui nécessitent en particulier une régénération périodique,
- un système de soupape permettant de commander des débits volumétriques dans l'installation de traitement de l'eau muni d'un élément de commande (1) mobile, ainsi que d'un contre-élément (5) disposé de manière fixe dans un boîtier (4), dans lequel l'élément de commande (1) repose de manière étanche sur le contre-élément (5) et peut être déplacé successivement par rapport au contre-élément (5) de manière répétée périodiquement dans au moins deux positions de fonctionnement (P1, P2, P3) d'un cycle de fonctionnement avec des fonctions de soupape configurées différemment,
- un capteur (6) permettant de déterminer la position actuelle de l'élément de commande (1) par rapport au contre-élément (5), et
- un dispositif permettant d'inverser le sens de déplacement de l'élément de commande (1) par rapport au contre-élément (5),
dans lequel le sens de déplacement de l'élément de commande (1) est inversé au moins une fois par cycle de fonctionnement,
dans lequel une position de référence (R) de l'élément de commande (1) est déterminée au moyen du capteur (6),
et dans lequel la position actuelle de l'élément de commande (1) est définie à partir de la position de référence (R), la vitesse de déplacement v et le temps de fonctionnement T d'un moteur,
**caractérisé en ce que,**
la position de référence (R) est décalée respectivement d'une section x > 0 par rapport aux positions de fonctionnement (P1, P2, P3) individuelles,
**en ce que** l'élément de commande (1) est configuré de telle sorte que la position de référence (R) soit agencée spatialement entre deux des positions de fonctionnement (P1, P2, P3) et **en ce que** l'élément de commande (1) soit déplacé de la position de référence (R) d'une part dans une direction vers l'une des positions de fonctionnement (P1, P2, P3), mais aussi d'autre part dans la direction opposée vers une autre de ces positions de fonctionnement (P1, P2, P3).

2. Procédé selon la revendication 1 permettant le fonctionnement d'une installation de traitement de l'eau, pour laquelle l'élément de commande (1) est conçue comme un disque de commande rotatif munie de plusieurs ouvertures de passage (2a, 2b, 2c, 2d, 2e) et le contre-élément (5) est conçue comme un contre-disque disposé de manière fixe muni de plusieurs ouvertures de passage, dans lequel la position de référence (R) est décalée respectivement d'un angle de rotation αₓ > 0° par rapport à chaque position de fonctionnement (P1, P2, P3), **caractérisé en ce que** le disque de commande (1) est mis en rotation à une vitesse angulaire ω par rapport au contre-disque (5) fixe, dans lequel dans les différentes positions de fonctionnement (P1, P2, P3) diverses ouvertures de passage (2a, 2b, 2c, 2d, 2e) du disque de commande (1) et du contre-disque (5) sont reliées entre-elles, et dans lequel la position de référence (R) est décalée respectivement d'un angle de rotation αₓ > 0 par rapport aux positions de fonctionnement (P1, P2, P3) individuelles.

3. Procédé selon la revendication 2, **caractérisé en ce que** le disque de commande (1) est mis en rotation de manière répétée périodiquement dans au moins trois positions de fonctionnement (P1, P2, P3) avec différentes fonctions de soupapes, dans lequel le disque de commande (1) atteint la position de fonctionnement après une inversion du sens de rotation de la position de référence (R) avant la position de fonctionnement suivante.

4. Procédé selon l'une quelconque des revendications 1 à 3 permettant le fonctionnement d'une installation de traitement de l'eau, pour laquelle un moteur électrique, en particulier un moteur pas à pas, est prévu pour le déplacement automatisable de l'élément de commande (1), **caractérisé en ce qu'**un jeu de moteur après inversion du sens de déplacement est défini par les étapes suivantes
a) Détermination expérimentale du temps de fonctionnement Tₑₓₚ. du moteur après inversion du sens de déplacement jusqu'à ce que l'élément de commande (1) atteigne la position de référence (R),
b) Calcul du temps de fonctionnement théorique T_{théo}. du moteur à partir de la vitesse de déplacement v et de la distance entre la position d'inversion et la position de référence (R),
c) Détermination du jeu à partir de la différence Tₑₓₚ. - T_{théo}. et la vitesse de déplacement v,
dans lequel le jeu déterminé est utilisé pour au moins une détermination de position ultérieure après une nouvelle inversion du sens de déplacement,
et **en ce que** de préférence un message d'alerte est émis lorsque le jeu déterminé du moteur ou sa variation dépasse une valeur seuil GW prédéfinie.

5. Procédé selon l'une quelconque des revendications 1 à 4, **caractérisé en ce que** les signaux détectés par le capteur (6) sont soumis à une évaluation électronique et les signaux évalués sont utilisés pour déterminer la position actuelle de l'élément de commande (1).
